# EUROPÄISCHE PATENTSCHRIFT

(11) **EP 1 869 805 B1**
(45) Veröffentlichungstag und Bekanntmachung des Hinweises auf die Patenterteilung: **17.02.2010**
(21) Anmeldenummer: 06742236.0
(22) Anmeldetag: 11.04.2006
(51) Int. Cl.: H04B 10/00, F15B 21/08

(54) **ELEKTROOPTISCHE KOPPLUNGSEINRICHTUNG**
ELECTROOPTICAL COUPLING DEVICE
DISPOSITIF DE COUPLAGE ELECTRO-OPTIQUE

(30) Priorität: 11.04.2005 DE 102005016735
(43) Veröffentlichungstag der Anmeldung: 26.12.2007
(73) Patentinhaber: Norgren GmbH, 70736 Fellbach (DE)
(72) Erfinder: QUAST, Erhard, 51598 Friesenhagen (DE)
(74) Vertreter: Lanoe, Benjamin
(86) Internationale Anmeldenummer: PCT/DE2006/000648
(87) Internationale Veröffentlichungsnummer: WO 2006/108403

(56) Entgegenhaltungen:
- EP-A- 1 002 961
- EP-A- 1 431 588

## Beschreibung

Die Erfindung betrifft eine Einrichtung zur Ankopplung elektrischer Datenleitungen an eine modulartig aufgebaute Ventilstation nach dem Oberbegriff des Anspruchs 1.

### Stand der Technik

Eine solche modulartig aufgebaute Ventilstation, auch als Ventilinsel bezeichnet, geht beispielsweise aus der nicht vorveröffentlichten DE 103 53 295.1 hervor. Bei einer modulartig aufgebauten Ventilstation sind mehrere Ventilblöcke miteinander verbunden und bilden eine bauliche Einheit, die beispielsweise mit einem elektrischen Zentralstecker (Multipol) oder einem Feldbusinterface an eine Steuerleitung anschließbar ist. Die aus der DE 103 53 295.1 hervorgehende Ventilstation weist Ventilmodule auf, bei denen die Datenübertragung auf optoelektronischem Wege erfolgt. Dies ist gegenüber der Verbindung der Ventilmodule durch elektrische Steckverbindungen sehr vorteilhaft, da die zumeist hohen mechanischen Toleranzanforderungen unterliegenden Steckverbindungen leicht beschädigt, beispielsweise die Steckerkontakte verbogen werden können und dergleichen. Darüber hinaus werden derartige Ventilstationen sehr oft in kritischen Umgebungen eingesetzt, bei denen elektrische Kontakte unerwünscht sind.

Die Datenkommunikation auf optoelektronischem Wege zwischen den einzelnen Ventilmodulen beseitigt diese Nachteile, vermeidet mechanische Schnittstellen und ermöglicht insbesondere eine sehr vorteilhafte galvanische Trennung.

Gleichwohl muß die Ankopplung an elektrische Datenleitungen, beispielsweise an ein Feldbussystem bei den aus der DE 103 53 295.1 hervorgehenden Ventilstationen durch Steckverbindungen, beispielsweise durch die erwähnten elektrischen Zentralstecker (Multipol) erfolgen.

Die JP 05-180366 A offenbart eine gemeinsame Steuereinrichtung für Aktuatoren, mit einem optischen Sender zur Umwandlung elektrischer Signale in optische Signale. Bei dieser Anordnung kommuniziert ein Sender-Empfängermodul mit einzelnen Ventilen einer nicht modular aufgebauten Ventilinsel über Datenleitungen auf elektrischem Wege.

Aus der EP-A-1431588 ist eine opto-eleletrische Steuervorrichtung bekannt.

Der Erfindung liegt das Problem zugrunde, eine Einrichtung zur Ankopplung elektrischer Datenleitungen an eine modulartig aufgebaute Ventilstation zu vermitteln, welche auf elektrische Steckkontakte verzichtet und an unterschiedlichste elektrische Signalformen adaptierbar ist.

Diese Aufgabe wird bei einer Einrichtung zur Ankopplung elektrischer Datenleitungen an eine modulartig aufgebaute Ventilstation mit den Merkmalen des Anspruchs 1 gelöst.

### Vorteile der Erfindung

Zur Vermeidung von Schnittstellen mittels elektrischer Stecker sieht die erfindungsgemäße Koppeleinrichtung zur Ankopplung elektrischer Datenleitungen an die Ventilmodule der modulartig aufgebauten Ventilstation ein Koppelmodul und ein von diesem getrenntes Sender- und Empfängermodul vor. Das Koppelmodul ist an die elektrische Datenleitung anschließbar und wandelt die elektrischen Signale der Datenleitungen in optische Signale um. Das Sender-/Empfängermodul ist an das eingangsseitige Ventilmodul angekoppelt zur Datenkommunikation mit den Ventilmodulen auf optoelektrischem Wege. Durch diese Zweiteilung in Koppelmodul und Sender-/Empfängermödul kann eine Ankopplung unterschiedlichster Datenleitungen an eine modulartig aufgebaute Ventilstation mit Ventilmodulen erfolgen, wobei das Koppelmodul jeweils an die Charakteristika der elektrischen Datenleitungen angepaßt wird und das Sender-/Empfängermodul an die Datenkommunikation der Ventilmodule. Insbesondere ist durch die Einrichtung umfassend Koppelmodul und Sende-/Empfängermodul eine Konversion und Anpassung der von beliebigen elekrischen Vorrichtungen, Verbrauchern und dergleichen ausgegebenen Daten an die Datenart einer Ventilinsel möglich. Auf diese Weise können beliebige Einrichtungen und Vorrichtungen an eine Ventilinsel angekoppelt werden und mit dieser kommunizieren, was bei aus dem Stand der Technik bekannten Ventilinseln in dieser Form nicht möglich ist.

Durch die in den Unteransprüchen aufgeführten Maßnahmen und Merkmale sind vorteilhafte Weiterbildungen und Verbesserungen der im Anspruch 1 angegebenen Steuereinrichtung möglich.

Das Datensignal kann z. B. ein paralleles elektrisches Datensignal sein, mit dem einzelne Verbraucher angesteuert werden können. In diesem Falle erfolgt unmittelbar eine Wandlung in ein serielles optisches Signal. Bei einer vorteilhaften Ausführungsform ist es ein Bussignal, welches in dem Koppelmodul zunächst in ein paralleles elektrisches und dieses,sodann in ein serielles optisches Signal gewandelt wird. Das Koppelmodul kann so sehr vorteilhaft an die unterschiedlichsten Signalformen angepaßt werden.

Bevorzugt bilden die elektrischen Datenleitungen ein Bussystem. In diesem Falle bildet das Koppelmodul das letzte Modul eines Busknotens. Das Bussystem kann insbesondere ein Lokalbussystem sein.

Eine besonders vorteilhafte Ausführungsform sieht vor, daß das Sende-/Empfangsmodul mit den Ventilmodulen auf optoelektronischem Wege über optoelektronische Sende-/Empfangsmittel zur bidirektionalen Datenkommunikation Wege kommuniziert.

Diese Sende- und Empfangsmittel werden vorteilhafterweise durch Fotodioden und/oder Fototransistoren realisiert.

Durch die gewissermaßen Aufspaltung der Einrichtung in ein Koppelmodul und ein Sender-/Empfängermodul ist es darüber hinaus sehr vorteilhaft möglich, die bidirektionale optische Datenüberleitung über längere Wege mittels wenigstens eines zwischen dem Ausgang des Koppelmoduls und dem Eingang des Sender-/Empfängermoduls angeordneten Lichtwellenleiters vorzunehmen. Auch ungünstige Einbausituationen können so berücksichtigt werden.

Die bidirektionale optische Datenkommunikation erfolgt vorzugsweise mittels nicht sichtbaren Lichts. Hierbei kommt insbesondere Licht im infraroten Längenwellenbereich zum Einsatz.

### Zeichnung

Weitere Vorteile und Merkmale der Erfindung sind Gegenstand der nachfolgenden Beschreibung sowie der zeichnerischen Darstellung von Ausführungsbeispielen der Erfindung.

In der Zeichnung zeigen:
- Fig. 1: schematisch eine von der Erfindung Gebrauch machende Koppeleinrichtung zur optischen Ankopplung einer modulartig aufgebauten Ventilstation an einen Feldbusknoten;
- Fig. 2: ein weiteres Ausführungsbeispiel einer von der Erfindung Gebrauch machenden Koppeleinrichtung zur Ankopplung einer modulartig aufgebauten Ventilstation an einen Feldbusknoten;
- Fig. 3: schematisch das Prinzipschaltbild des Koppelmoduls;
- Fig. 4: schematisch das Prinzipschaltbild des an die Ventilmodule angekoppelten Sender-/Empfängermoduls und
- Fig.5: schematisch ein weiteres Ausführungsbeispiel einer Koppeleinrichtung.

### Beschreibung der Ausführungsbeispiele

Eine modulartig aufgebaute Ventilstation 200, eine sogenannte Ventilinsel umfaßt eine Mehrzahl von aneinander befestigten Ventilmodule 210. Diese Ventilmodule 210 weisen ihrerseits eine (nicht dargestellte) Schaltungseinrichtung zur Datenkommunikation und zur Ansteuerung von (nicht dargestellten) Ventilen, Aktoren oder Sensoren auf. Eine solche Ventilstation 200 soll nun an einen Feldbusknoten 100 angeschlossen werden, der seinerseits eine Mehrzahl von I/O-Modulen 110 (Eingabe-/Ausgabemodule) aufweist. Als letztes Modul ist hierzu ein Koppelmodul 120 vorgesehen, welches die elektrischen Daten des Feldbussystems in optische Daten wandelt und durch ein optisches Sende- und Empfangsmittel 122 an ein optisches Sende- und Empfangsmittel 222 eines Sender-/Empfängermoduls 220 überträgt, weiches eingangsseitig vor dem ersten Ventilmodul 210 angeordnet und mit diesem zur Datenübertragung optoelektronisch verbunden ist.

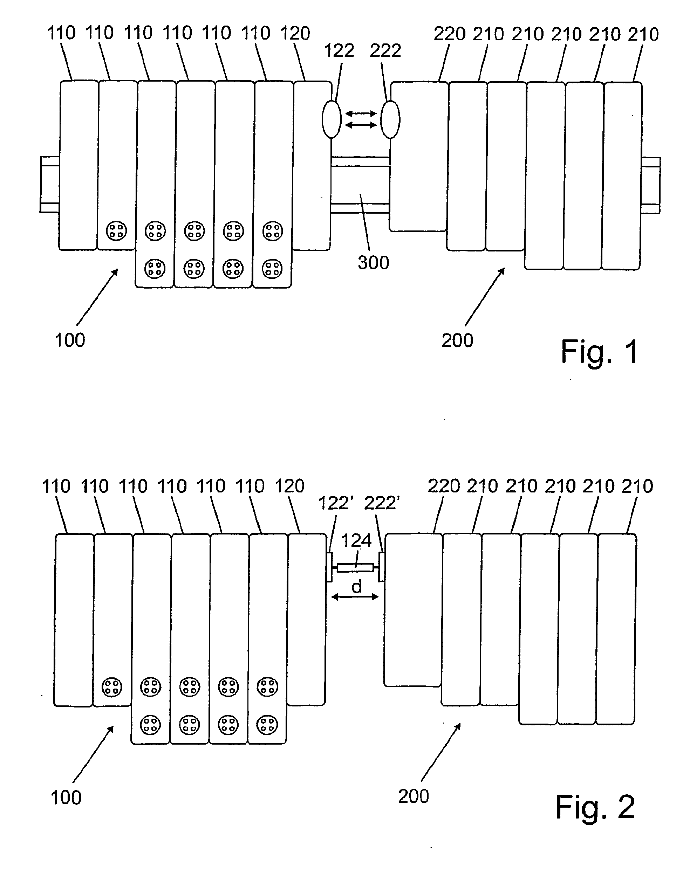

Wie in Fig. 1 dargestellt, kann die Ventilstation 200 mit dem Feldbusknoten 100 beispielsweise über eine Schiene 300 verbunden sein. Das Koppelmodul 120 ist an das Bussystem, beispielsweise einen Lokalbus angepaßt, wohingegen das Sender-/Empfängermodul 220 hinsichtlich seines optischen Datenübertragungsverhaltens an die Ventilmodule 210 angepaßt ist. Durch diese gewissermaßen zweigeteilte Einrichtung zur Kopplung des Feldbusknotens 100 an die Ventilstation 200 kann nicht nur auf mechanische Steckkontakte verzichtet werden, es wird auch eine galvanische Entkopplung erreicht. Auf diese Weise können lediglich durch Austausch des Koppelmoduls 120 sehr schnell und nur mit geringstem technischem Aufwand unterschiedliche elektrische Datenkommunikationssysteme an die Ventilstation 200 angekoppelt werden.

Fig. 1 zeigt die Kopplungseinrichtung zur besseren Erläuterung des optischen Übertragungswegs im nicht fertig montierten Zustand. Im fertig montierten Zustand liegt das optoelektronische Sende-/Empfangsmodul 122 des Koppelmoduls 120 direkt dem optoelektronischen Sende-/Empfangsmodul 222 des Sender-/Empfängermoduls gegenüber, wobei die gesamte Anordnung durch die dann nicht sichtbare Schiene 300 gelagert wird.

Bei einem weiteren, in Fig. 2 dargestellten Ausführungsbeispiel sind gleiche Elemente mit den gleichen Bezugszeichen versehen, so daß bezüglich deren Beschreibung auf das Vorstehende vollinhaltlich Bezug genommen wird.

Im Unterschied zu dem in Fig. 1 dargestellten Ausführungsbeispiel ist bei dem in Fig. 2 dargestellten Ausführungsbeispiel bei dem Koppelmodul eine Auskopplung 122' für einen Lichtwellenleiter 124 und bei dem Sender-/Empfängermodul 220 ebenfalls eine Schnittstelle zum Anschluß des Lichtwellenleiters 124 vorgesehen. In diesem Falle erfolgt die Datenkommunikation bidirektional auf optischem Wege über eine Distanz d, die beispielsweise 10 m oder mehr betragen kann, über den Lichtwellenleiter 124. Dieses Ausführungsbeispiel weist den Vorteil auf, daß die Ventilstation 200 auch hinsichtlich ihrer räumlichen Positionierung völlig getrennt von dem Feldbusknoten angeordnet sein kann. Hierdurch ist eine Datenübertragung auch in einer räumlich nachteiligen Bausituation möglich, wobei insbesondere die Ventilstation 200 und das Koppelmodul auch im Winkel zueinander und insbesondere auch versetzt zueinander angeordnet werden können.

Das Sender-/Empfängermodul 220 weist eine eigene Spannungsversorgung auf und ist so auch hinsichtlich seiner Spannungsversorgung völlig von der elektrischen Datenleitung, beispielsweise dem Busknoten 100 entkoppelt. Es kann auch vorgesehen sein, daß die Spannungsversorgung des Sender-/Empfängermoduls 220 durch die Spannungsversorgung der Ventilmodule 210 erfolgt.

Die optoelektronischen Empfangsmittel und Sendemittel können auf die unterschiedlichste Art und Weise ausgebildet sein. Eine vorteilhafte einfach und kostengünstig zu realisierende Ausführungsform sieht vor, daß die Sendemittel die Fotodioden und die Empfangsmittel Fototransistoren sind. Die Übertragung geschieht dabei insbesondere durch Licht im nicht sichtbaren Bereich, wobei hier ganz besonders Licht im infraroten Wellenlängenbereich zum Einsatz kommt. Die Datenkommunikation zwischen den einzelnen Ventilmodulen 210 erfolgt dabei auf eine in der nicht vorveröffentlichten DE 103 53 295.1, Seite 7, letzter Absatz bis Seite 9, vierter Absatz, die zum Zwecke der Offenbarung in vorliegende Anmeldung einbezogen werden, Bezug genommen wird, beschriebene Weise.

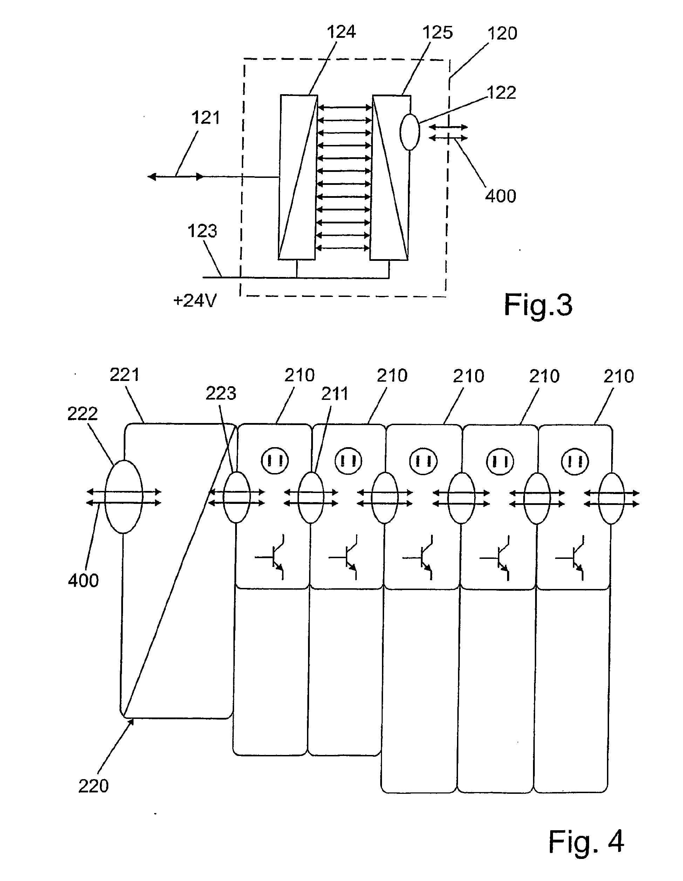

Ein Prinzipschaltbild eines Koppelmoduls 120 ist schematisch in Fig. 3 dargestellt. Ein Koppelmodul 120 weist zum einen eine Eingangsleitung 121 für den lokalen Bus auf, zum anderen eine oder mehrere Leitungen 123 zur Spannungsversorgung. Das Koppelmodul weist eine erste Schaltungseinrichtung 124 auf zur Umwandlung des Bussignals in ein paralleles Signal und eine zweite Schaltungsanordnung 125 zur Umwandlung des parallelen in ein serielles Signal, welches dann durch die optoelektronische Sende- und Empfangseinrichtung 122 ausgegeben wird. Für diese Anordnung wird das Lokalbusprotokoll nicht benötigt.

Ein in Fig. 4 dargestellte Sender-/Empfängermodul 220 weist einen Wandler 221 auf zur Verarbeitung des von der optoelektronischen Sende-/Empfangseinrichtung 222 empfangenen Lichtsignal 400 auf. Dieser Wandler 221 wandelt das Signal in ein Signal, welches kompatibel ist mit der optoelektronischen Signalübertragung der Ventileinheit 210. Die gewandelten optischen Signale werden durch ein weiteres optoelektronisches Sende-/Empfangsmittel 223, das Teil des Sender-/Empfängermoduls ist, an entsprechende optoelektronische Sende-/Empfangsmittel 211 der Ventilmodule 210 angekoppelt.

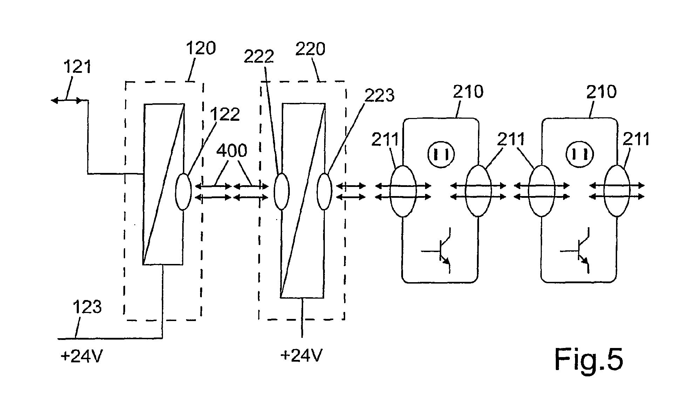

Bei einem weiteren, in Fig. 5 dargestellten Ausführungsbeispiel wird das Lokalbusprotokoll, welches seriell in elektrischer Signalform vorliegt, direkt in eine optische Signalform von dem Koppelmodul 120 umgewandelt und von diesem an das Sende-/Empfängermodul auf optischem Wege übertragen, wo es gegebenenfalls nach einer weiteren Wandlung der Signalform ebenfalls auf seriellem Wege an die Ventileinheiten 210 weitergegeben wird.

Die vorstehend beschriebenen Ausführungsbeispiele zeigen die sehr vorteilhafte Ankopplung des Sender-/Empfängermoduls 220 zur Ankopplung an eine Ventilstation 200, deren Ventilmodule auf optischem Wege miteinander kommunizieren. Es versteht sich, daß die Erfindung nicht hierauf beschränkt ist, sondern daß das Sender-/Empfängermodul 220 rein prinzipiell auch nach Empfang der Datensignale auf optischem Wege eine Umwandlung in elektrische Signale vornehmen kann, so daß an sich bekannte Ventilstationen 200, bei welchen die Datenkommunikation zwischen den Ventilmodulen auf elektrischem Wege erfolgt, eingesetzt werden kann.

## Patentansprüche

1. Einrichtung zur Ankopplung elektrischer Datenleitungen, insbesondere eines Bussystems, an eine modulartig aufgebaute Ventilstation mit einer Mehrzahl von Ventilmodulen, umfassend ein an die elektrischen Datenleitungen anschließbares Koppelmodul zur Wandlung der elektrischen Signale der Datenleitungen in optische Signale und ein mit dem Koppelmodul bidirektional auf optischem Wege kommunizierendes, an das eingangsseitige Ventilmodul ankoppelbares Sender-/Empfängermodul zur Datenkommunikation mit den Ventilmodulen auf optoelektrischem Wege.

2. Einrichtung nach Anspruch 1, **dadurch gekennzeichnet, daß** das Datensignal ein Bussignal ist und in dem Koppelmodul zunächst eine Umwandlung des Bussignals in ein paralleles elektrisches und sodann eine Umwandlung des parallelen elektrischen in ein serielles optisches Signal erfolgt.

3. Einrichtung nach einem der Ansprüche 1 oder 2, **dadurch gekennzeichnet, daß** das Koppelmodul das letzte Modul eines Busknotens, insbesondere eines Feldbusknotens, bildet.

4. Einrichtung nach einem der Ansprüche 1 bis 3, **dadurch gekennzeichnet, daß** die Datenkommunikation des Sender-/Empfängermoduls mit den Ventilmodulen über optoelektronische Sende- und Empfangsmittel zur bidirektionalen Datenkommunikation auf optoelektronischem Wege erfolgt.

5. Einrichtung nach einem der vorstehenden Ansprüche, **dadurch gekennzeichnet, daß** die optoelektronische Datenkommunikation durch Fotodioden und/oder Fototransistoren erfolgt.

6. Einrichtung nach einem der Ansprüche 1 bis 5, **dadurch gekennzeichnet, daß** die bidirektionale optische Datenübertragung über wenigstens einen zwischen dem Ausgang des Koppelmoduls und dem Eingang des Sender-/Empfängermoduls angeordneten Lichtwellenleiter erfolgt.

7. Einrichtung nach einem der Ansprüche 1 bis 6, **dadurch gekennzeichnet, daß** die bidirektionale optische Datenübertragung mittels nicht sichtbarem Licht erfolgt.

8. Einrichtung nach Anspruch 7, **dadurch gekennzeichnet, daß** die Wellenlänge des nicht sichtbaren Lichts im infraroten Wellenlängenbereich liegt.

## Claims

1. Device for coupling electrical data lines, in particular in a bus system, to a modular valve station having a plurality of valve modules, comprising a coupling module which can be connected to the electrical data lines for converting the electrical signals of the data lines into optical signals and a transmitter/receiver module for data communication with the valve modules by optoelectrical means which communicates bidirectionally with the coupling module by optical means and can be coupled to the valve module on the input side.

2. Device according to claim 1, **characterised in that** the data signal is a bus signal and in the coupling module initially, conversion of the bus signal into a parallel electrical signal and subsequently, conversion of the parallel electrical signal into a serial optical signal takes place.

3. Device according to one of the claims 1 or 2, **characterised in that** the coupling module is the last module of a bus node, in particular a field bus node.

4. Device according to one of the claims 1 to 3, **characterised in that** the data communication of the transmitter/receiver module with the valve modules takes plaice via optoelectronic transmitting and receiving means for bidirectional data communication by optoelectronic means.

5. Device according to one of the preceding claims, **characterised in that** the optoelectronic data communication takes place by means of photodiodes and/or phototransistors.

6. Device according to one of the claims 1 to 5, **characterised in that** the bidirectional optical data transmission takes place via at least one optical waveguide arranged between the output of the coupling module and the input of the transmitter/receiver module.

7. Device according to one of the claims 1 to 6, **characterised in that** the bidirectional optical data transmission takes place by means of non-visible light.

8. Device according to claim 7, **characterised in that** the wavelength of the non-visible light lies in the infrared wavelength region.

## Revendications

1. Dispositif pour coupler les lignes de données électriques, en particulier dans un système de bus, à une station de valves modulaire ayant une pluralité de modules de valve, comprenant un module de couplage qui peut être connecté aux lignes de données électriques pour convertir les signaux électriques des lignes de données en signaux optiques et un module émetteur-récepteur pour la communication des données avec les modules de valve par un moyen optoélectrique qui communique bidirectionnellement avec le module de couplage par un moyen optique et peut être couplé au module de valve du côté entrée.

2. Dispositif selon la revendication 1, **caractérisé en ce que** le signal de données est un signal de bus et dans le module de couplage initialement, la conversion du signal de bus en un signal électrique parallèle et, ultérieurement, la conversion du signal électrique parallèle en un signal optique série a lieu.

3. Dispositif selon l'une des revendications 1 ou 2, **caractérisé en ce que** le module de couplage est le dernier module d'un noeud de bus, en particulier un noeud de bus de champ.

4. Dispositif selon l'une des revendications 1 à 3, **caractérisé en ce que** la communication des données du module émetteur-récepteur avec les modules de valve a lieu par l'intermédiaire d'un moyen d'émission et de réception optoélectronique pour la communication bidirectionnelle des données par un moyen optoélectronique.

5. Dispositif selon l'une des revendications précédentes, **caractérisé en ce que** la communication optoélectronique des données a lieu au moyen de photodiodes et/ou de phototransistors.

6. Dispositif selon l'une des revendications 1 à 5, **caractérisé en ce que** la transmission bidirectionnelle des données optiques a lieu par l'intermédiaire d'au moins un guide d'ondes optique arrangé entre la sortie du module de couplage et l'entrée du module émetteur-récepteur.

7. Dispositif selon l'une des revendications 1 à 6, **caractérisé en ce que** la transmission bidirectionnelle des données optiques a lieu au moyen de lumière non-visible.

8. Dispositif selon la revendication. 7, **caractérisé en ce que** la longueur d'onde de la lumière non-visible se trouve dans la région de longueur d'onde infrarouge.
